# EUROPEAN PATENT APPLICATION

(11) **EP 1 209 597 A1**
(43) Date of publication of application: **29.05.2002**
(21) Application number: 01126555.0
(22) Date of filing: 15.11.2001
(51) Int. Cl.: G06F 17/60

(54) **Methods for sending and receiving content and system for delivering content through use of e-mail**

(30) Priority: 24.11.2000 JP 2000357295
(71) Applicant: MATSUSHITA ELECTRIC INDUSTRIAL CO., LTD., Kadoma-shi, Osaka 571-8501 (JP)
(72) Inventor: Taniguchi, Koji, Yokohama-shi, Kanagawa 230-0024 (JP); Fujikawa, Wataru, Yokohama-shi, Kanagawa 224-0054 (JP)
(74) Representative: Balsters, Robert

(57) **Abstract**

An information receiving terminal notifies an information distribution server of a request for delivery of content. This delivery request specifies a category of the content, a delivery validity period and a character string in a subject header of an e-mail to be delivered. The information distribution server selects the content conforming to the delivery request from information provided by an information provision terminal, includes the content in the e-mail and delivers the e-mail to the information receiving terminal. The information receiving terminal classifies the e-mail received by means of the character string in the subject header of the delivered e-mail and a date and time when the e-mail is received. With this classification, the information receiving terminal presents the e-mail including the requested content to a user without fail and deletes a past-due e-mail having declined value of information automatically.

## Description

### FIELD OF THE INVENTION

The present invention relates to methods for sending and receiving content and a system for delivering the content through use of e-mail or the like.

### BACKGROUND OF THE INVENTION

With prevalence of personal computers and portable terminals and increase of Internet users, numbers of information distribution systems utilizing telecommunication networks are developed. Associated with this development, advertising through delivery of direct e-mail carrying advertising information to an indefinite number of users is active.

Information provision service which collects, from advertisers, advertisement charges to cover, in full or in part, a charge that each user must assume to obtain information has also started.

Concrete examples of existing services or systems associated with delivery of advertisements are as follows.

Japanese Unexamined Patent Publication No. 11-136365 (1999) discloses an information delivery system in which a terminal receives content, which is desirably updated at regular intervals, automatically.

Japanese Unexamined Patent Publication No. 11-195035 (1999) discloses an information delivery method adapting to changes of delivery needs of a user with respect to time dynamically by utilizing information about a delivery history and a user-input score for relevance to delivered information.

Japanese Unexamined Patent Publication No. 11-68987 (1999) discloses an information and communication system having a server keep information about a user and changing advertising information to be included in transmit data based on this information about the user to provide data communication service at an inexpensive rate.

Japanese Unexamined Patent Publication No. 2000-99525 discloses an information provision method of delivering appropriate informational content for every time period by utilizing a user profile recording information in which a user is interested based on a pattern of the user's life that varies for every time period (periodically) and an article profile recording freshness of the information and the number of accesses to the information.

Japanese Unexamined Patent Publication No. 11-134353 (1999) discloses an individual-specific advertisement delivery method of delivering an advertisement carrying much information to a user who seems to have much interest in advertisement and delivering an advertisement carrying a little information to a user who seems to have little interest in advertisement, instead of delivering the same advertisement to all the users in sending informational data with an advertisement included therein.

These examples are systems intended for effective and efficient advertisement delivery suitable for a user's taste and satisfy both an advertiser and the user taking the advertisement delivery.

In addition, Japanese Unexamined Patent Publication No. 11-167533 (1999) discloses an e-mail firewall device rejecting reception of junk mail by means of e-mail addresses. This example is intended for elimination of unsolicited advertising e-mail on the part of a user.

In most of the systems mentioned above, the users' tastes (subjects of interest) are previously stored in a system of an advertisement distribution server, and e-mail including information conforming to each user's taste is delivered to each user individually. Such e-mail is referred to as opt-in mail, and there already exist many Web sites offering the opt-in mail service.

However, the conventional opt-in mail service mentioned above has the following problem. In cases where registered personal information is revealed to a third party, an advertisement distribution agent which has gained possession of this personal information may send informational content or advertising e-mail that a user corresponding to this personal information does not solicit, resulting in the reception of unsolicited bulk e-mail on the part of the user.

Also, the conventional systems are not each provided with a method of setting an advertisement delivery period. Consequently, the user must continue to receive e-mail carrying information about or advertisements for certain goods or information or advertisements irrelevant to the goods on a semipermanent basis even in cases where the user wants the advertisements delivered for only a certain period of time. In many cases, the user can stop the advertisement delivery by updating or deregistering the information registered with the server. However, this is a troublesome matter caused to the user.

With increasing advertisement delivery to individuals, it is conceivable that the user receives not only requested advertising e-mail but also e-mails from an indefinite number of companies. In this case, a system for deleting an obviously unnecessary e-mail automatically from a plurality of e-mails received to prevent the user from missing an important e-mail becomes essential.

In other words, the existing content delivery systems have a problem that the user does not have any means to obtain information on or advertisements for a certain genre efficiently for only a certain period of time.

The present invention addresses the problems discussed above and aims to provide a method for sending content, a method for receiving the content and a system for deliverying the content that allow a user to obtain information on or advertisements for a certain genre efficiently for only a certain period of time.

### SUMMARY OF THE INVENTION

To address the above-described problems, a method for sending content according to the present invention includes the steps of: storing, in a content delivery list, a request for delivery of the content that is provided by a user and includes a delivery validity period representing a period during which the delivery of the content is accepted and an address of an addressee of the content; extracting the delivery request within the delivery validity period from the content delivery list; and delivering the content based on the extracted delivery request.

A method for receiving content according to the present invention includes the steps of: updating an awaiting content list by storing, in the awaiting content list, awaiting content information including a delivery validity period that is previously registered with a distributor requested to deliver the content and represents a period during which the delivery of the content is accepted, and an address of the distributor requested to deliver the content; and extracting only receive data conforming to the given conditions for selection of the content that are stored in the awaiting content list.

A program product according to the present invention causes a computer to perform the above-described method for sending the content.

Another program product according to the present invention causes a computer to perform the above-described method for receiving the content.

A content distribution server according to the present invention includes: a delivery request registration unit for storing, in a content delivery list, a request for delivery of content that includes a delivery validity period representing a period during which the delivery of the content is accepted and an address of an addressee of the content; and a content delivery unit for extracting the delivery request within the delivery validity period from the content delivery list and delivering the content based on the extracted delivery request.

A content receiving terminal according to the present invention includes: a delivery request generation unit for generating a request for delivery of content that includes a user-specified delivery validity period representing a period during which the delivery of the content is accepted and a user-specified address of an addressee of the content; an editor for storing, in an awaiting content list, awaiting content information including the delivery validity period and an address of a distributor requested to deliver the content; a receiver for receiving receive data including the content; and an analyzer for extracting only the receive data conforming to the given conditions for selection of the content that are stored in the awaiting content list.

A content delivery system according to the present invention includes the above-described content distribution server, the above-described content receiving terminal and a content provision server providing content.

According to this invention, the content distribution server sends an e-mail including the content conforming to the user-specified delivery request for only the user-specified delivery validity period, thus improving quality of service offered to the user. In addition, the probability is high that the content sent will be read, so that the content provider can perform effective delivery of the content.

Further, the content receiving terminal can extract only the e-mail sent, within the user-specified delivery validity period, from the address of the distributor requested to deliver, thus giving priority to the e-mail including the requested content in presenting the e-mail to the user.

### BRIEF DESCRIPTION OF THE DRAWINGS

Fig. 1 is a block diagram of an information delivery system in accordance with a first exemplary embodiment of the present invention.
Fig. 2 is a block diagram of an information receiving terminal in accordance with the first exemplary embodiment of the present invention.
Fig. 3 is a flowchart of a procedure for processing on the part of the information receiving terminal in accordance with the first exemplary embodiment of the present invention.
Fig. 4 is a flowchart of a procedure for transmission of a delivery request on the part of the information receiving terminal in accordance with the first exemplary embodiment of the present invention.
Fig. 5 is a flowchart of a procedure for reception of content on the part of the information receiving terminal in accordance with the first exemplary embodiment of the present invention.
Fig. 6 is a block diagram of an information distribution server in accordance with the first exemplary embodiment of the present invention.
Fig. 7 is a flowchart of a procedure for storage of content on the part of the information distribution server in accordance with the first exemplary embodiment of the present invention.
Fig. 8 is a flowchart of a procedure for storage of the delivery request on the part of the information distribution server in accordance with the first exemplary embodiment of the present invention.
Fig. 9 is a flowchart of a procedure for delivery of the content on the part of the information distribution server in accordance with the first exemplary embodiment of the present invention.
Fig. 10 is a block diagram of an information distribution server in accordance with a second exemplary embodiment of the present invention.
Fig. 11 is a block diagram of an information receiving terminal in accordance with the second exemplary embodiment of the present invention.
Fig. 12 shows examples of items listed in the delivery request in accordance with the first exemplary embodiment of the present invention.

### DESCRIPTION OF THE PREFERRED EMBODIMENTS

Exemplary embodiments of the present invention are demonstrated hereinafter with reference to the accompanying drawings.

### First Exemplary Embodiment

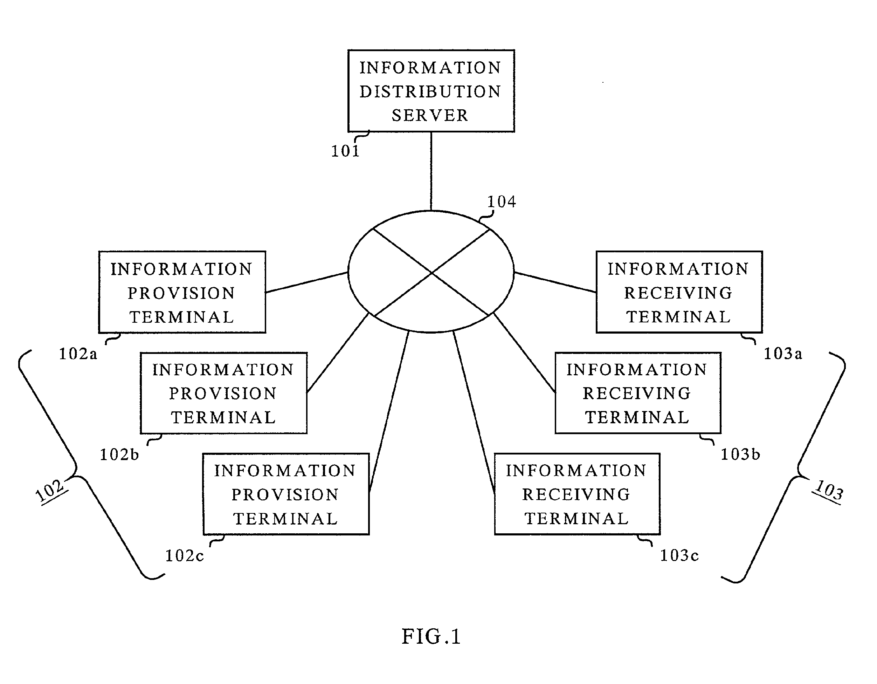

Fig. 1 is a block diagram of an information delivery system in accordance with the first exemplary embodiment of the present invention. In Fig. 1, information distribution server 101 manages informational contents and delivers the contents to arbitrary information receiving terminals.

Information provision terminals 102a-102c (hereinafter referred to as "information provision terminal 102" all together) provide distribution server 101 with the contents. This provision terminal 102 generates the contents and provides the contents thus made to server 101.

Information receiving terminals 103a-103c (hereinafter referred to as "information receiving terminal 103" all together) receive the contents from server 101 and display the contents thus received.

Distribution server 101, at least one or more provision terminals 102 and at least one or more receiving terminals 103 are connected to network 104. Across this network 104, server 101, provision terminal 102 and receiving terminal 103 are capable of intercommunicating with one another.

A description is provided hereinafter of an overview of operation of the thus-configured information delivery system.

Information distribution server 101 collects contents from a plurality of information provision terminals 102 and classifies the contents thus collected according to genre (category) to make a list of the contents. The thus-made list of the contents is disclosed on a Web page or the like so that an arbitrary receiving terminal can refer to this list. It is to be noted here that each of the contents is data represented in an arbitrary format such as text, a static image, sound, a dynamic image or the like, and the concrete contents include information about stock prices, weather forecasts, survey reports, advertisements for goods and electronic magazines.

Information receiving terminal 103 notifies distribution server 101 of a request for content delivery. Receiving terminal 103 generates this delivery request by referring to the Web page disclosed by server 101 or using other means. This delivery request carries a type of content of interest, a validity period of content delivery, content identifying information and others. Simultaneously with this notification of the delivery request, receiving terminal 103 keeps this delivery request as awaiting content information.

Distribution server 101 receives the delivery request sent from receiving terminal 103, selects the content conforming to this delivery request from the list of the contents and delivers the selected content to receiving terminal 103.

The validity period of content delivery that is included in the delivery request is a period between a date and time when a user starts to accept delivery of content and a date and time when the acceptance of delivery expires. Distribution server 101 checks this delivery validity period in delivering the content and sends the content to receiving terminal 103, which has sent the request, only within this validity period. Thus, receiving terminal 103 can take the content delivery for only the user-requested certain period of time.

For example, in cases where the user of receiving terminal 103 considers whether to buy a car within the next one month, the user can take delivery of information on (advertisements for) cars for only a month. This is also advantageous to the information providers, that is, distribution server 101 and provision terminal 102 because they can advertise efficiently.

The content identifying information is metadata added to the content to help identify the content delivered from distribution server 101. This content identifying information is information previously sent from receiving terminal 103 to server 101 as a part of the delivery request. For instance, in delivering the content to receiving terminal 103 by means of e-mail, server 101 enters a content identifier (text data in this case) specified by receiving terminal 103 in a subject header of the e-mail. In a conventional method, e-mails are classified according to e-mail sender's address. However, distribution server 101 which receives the delivery request does not necessarily coincide, at all times, with a distributor which actually delivers the content. Even in such a case, receiving terminal 103 can classify the e-mails in a predetermined way, that is, through use of a character string in the subject header. Such a means to classify and select the e-mails according to e-mail subject is thus useful to the user who reads the content received.

There may be cases where distribution server 101 acts only as an intermediary for content delivery, not managing the contents. In these cases, each provision terminal 102 keeps the contents and delivers the content directly to receiving terminal 103 through intermediation of server 101. It is to be noted here that provision terminal 102 is informed by server 101 about the delivery request and generates an e-mail by adding the above-mentioned similar function to the content conforming to this request.

Receiving terminal 103 can specify conditions relating to the content to distribution server 101 serving as a content distribution server, so that server 101 can deliver the content conforming to a data display capability of receiving terminal 103, time that the user can secure to read the content, a charge that the user can accept or the like.

A detailed description is hereinafter provided of respective configurations and operations of information distribution server 101 and information receiving terminal 103 in accordance with the present embodiment.

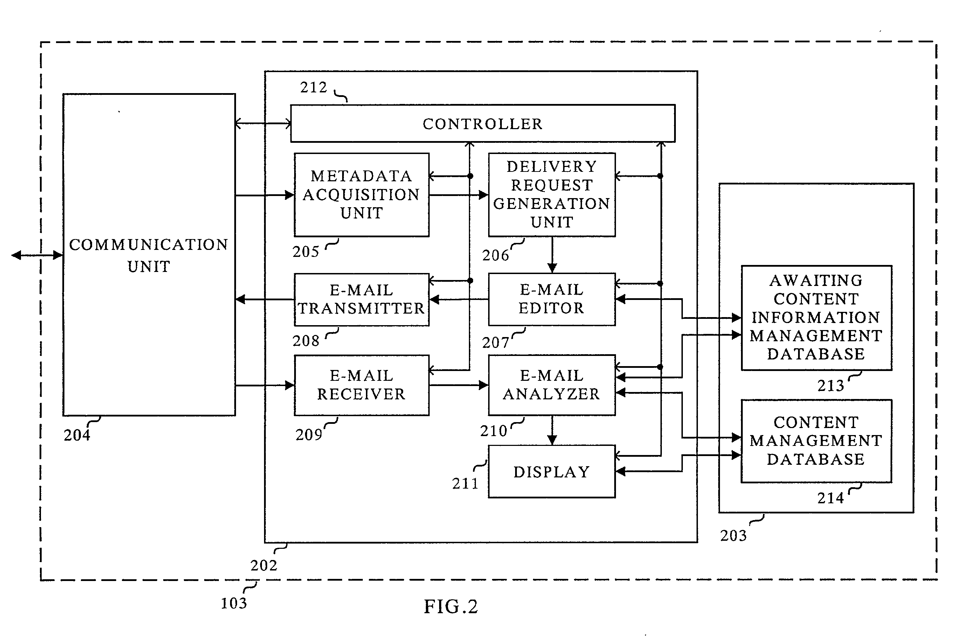

Fig. 2 is a block diagram of receiving terminal 103 of Fig. 1. This drawing is based on the present embodiment in which the notification of the request for content delivery is provided to distribution server 101 by e-mail, and content included in an e-mail is received.

Data processor 202 notifies distribution server 101 of the delivery request and analyzes, displays and stores the content sent from server 101. Processor 202 is comprised of several units (described later).

Data storage 203 is a nonvolatile storage device which stores contents of the delivery request and the content received and is freely accessible by processor 202.

Communication unit 204 intercommunicates with distribution server 101 and information provision terminal 102 across network 104. In Fig. 2, communication unit 204 is positioned outside data processor 202. In other words, communication unit 204 is a communication unit (a network interface) serving as a hardware resource of receiving terminal 103. However, it is possible to incorporate some facilities of communication unit 204 into processor 202.

The components of data processor 202 and functions of these components are described as follows.

Metadata acquisition unit 205 receives or obtains metadata carrying information on the deliverable content from the Web page of distribution server 101. In other words, server 101 provides receiving terminal 103 with the information on the deliverable content by means of the Web page or the like.

Delivery request generation unit 206 generates the delivery request including the delivery conditions from user-input information about content that the user wants to be delivered, that is, user-input information about the delivery request and based on the metadata obtained by acquisition unit 205. This generation unit 206 may include a graphical user interface (GUI) or an editor which allows the user to edit the delivery request.

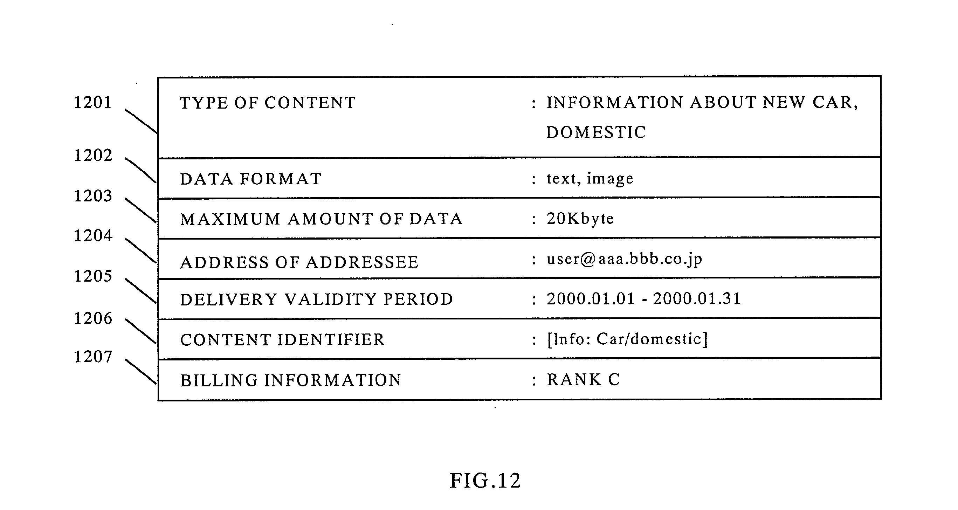

Fig. 12 shows an example of the delivery request generated by generation unit 206. As shown in Fig. 12, the delivery request is comprised of type 1201 of content, data format 1202, such as text, a static image, sound, a dynamic image or the like, of the content, maximum amount 1203 of data, validity period 1205 of content delivery, content identifying information 1206, information1207 about a billing form and others. The delivery request may also include address 1204 of an addressee of the content in preparation for cases where a terminal which sends the delivery request is different from a terminal which actually receives the content.

As described earlier, the validity period of content delivery is data representing the date and time when the acceptance of content delivery starts and the date and time when the acceptance of delivery expires, and the content identifying information is the metadata added to the content to help receiving terminal 103 classify the delivered content. The type of content is a character string or a code that represents a genre (a category) of the content and is presented by distribution server 101. The data format of the content is a data format such that receiving terminal 103 can decode, and the user requests or accepts hearing and reading.

The maximum amount of data is a maximum amount of data that receiving terminal 103 can receive. The data format and the maximum amount of data are set in accordance with performance of receiving terminal 103 or a user's taste. The information about the billing form is information representing a permissible amount of money payable for reception of content. In the present embodiment, billing ranking on a scale of A to C is set. Specifically, a user pays in full, half and none in the respective ranks A, B and C. Distribution server 101 includes advertising data in the content to be delivered to receiving terminal 103 in accordance with the billing rank specified by receiving terminal 103. Thus, the content which does not necessarily conform to the user-specified content attributes is also included in the e-mail to be delivered to the user in accordance with the amount of payment that the user accepts. This allows the user to be exempt, in full or in part, from the charge for the reception of content.

The content identifying information shown in Fig. 12 is a character string representing the type of content and is visually broken by the user. However, the content identifying information may be a character string encoded with International Data Encryption Algorithm (IDEA) or the like, or the character string representing the type of content may include a character string which does not easily occur to a third party to form the content identifying information. These ideas improve reliability of this content identifying information and enable completely automatic determination as to whether the e-mail should be read. Consequently, unnecessary e-mail such as spam mail can be kept out of the user's sight.

The delivery request may be described in Extensible Markup Language (XML) or in an extensible data description language comparable to XML. The use of XML to describe the delivery request facilitates analysis of this request on the part of distribution server 101 and also facilitates inter-coordination and data exchange with other systems.

E-mail editor 207 translates the delivery request generated by delivery request generation unit 206 into e-mail format. An address of distribution server 101 is designated as an address of an addressee of the e-mail. Editor 207 also has a function to store, in awaiting content information management database 213 of data storage 203, at least the delivery validity period and the content identifying information, which are included in the delivery request and given as one set, as the awaiting content information.

E-mail transmitter 208 sends the e-mail generated by editor 207 to distribution server 101.

E-mail receiver 209 receives all the e-mails sent across the Internet. It is to be noted that the e-mail delivered from distribution server 101 includes the content conforming to the delivery request specified by receiving terminal 103 and the content identifying information in its subject header.

E-mail analyzer 210 compares a title, which is the character string, in the subject header of the e-mail received by receiver 209 with the content identifying information stored in database 213 of data storage 203 and compares the date when this e-mail is received with the delivery validity period stored in database 213 of storage 203.

Analyzer 210 classifies the contents into two groups, that is, a group of contents that conform to the content identifying information and are received within the delivery validity period and a group of the other contents. Analyzer 210 stores the contents conforming to the delivery request in content management database 214 of data storage 203.

Display 211 displays the content determined by analyzer 210 as being conformable to the delivery request. Display 211 performs decoding on the content, display in text form and graphic drawing. Display 211 can also display the content stored in database 214 of data storage 203.

Controller 212 controls components 205-211 of data processor 202 and communication unit 204 to execute the reception of content.

Awaiting content information management database 213 is a database for managing the information about awaiting contents.

Content management database 214 is a database stored with the received contents.

The content included in the e-mail received by e-mail receiver 209 may include not only text data but also static image data, sound data and dynamic image data. In cases where the content includes data other than the text data, receiving terminal 103 has a decoding means compatible with these content data.

A body of the e-mail may carry only information (e.g., a URL of a Web site at which the content is found) about a link to the content. In this case, receiving terminal 103 has a means of downloading the content or a means of loading streams of data from the Web site specified.

Components 205-208 associated with the transmission of e-mail are not requisite to receiving terminal 103. Instead of these components 205-208, for example, a delivery request setting means such as Common Gateway Interface (CGI) or the like which is prepared in the server may be utilized. It is to be noted however that the delivery request registered with distribution server 101 needs to be stored in receiving terminal 103 for the purpose of classification of the e-mails received. In this case, data processor 202 must have a means to store the delivery request in data storage 203.

Information receiving terminal 103 performs a process of sending the request for content delivery to information distribution server 101 and a process of receiving the content.

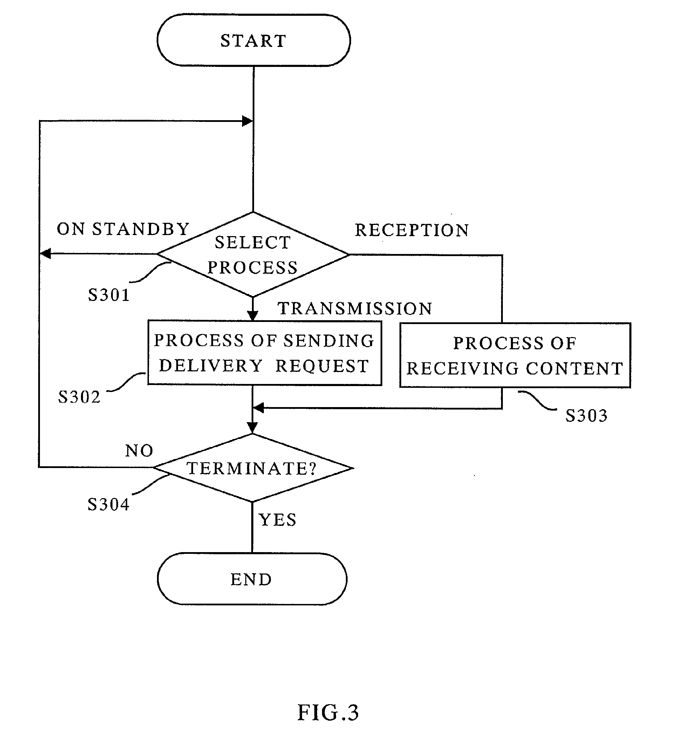

Referring to Figs. 3-5, a detailed description is hereinafter provided of these processes.

Fig. 3 is a flowchart of a procedure for processing on the part of receiving terminal 103. The process of sending the delivery request is carried out in response to instructions from the user, while the process of receiving the content is carried out when the e-mail sent from distribution server 101 is received during automatic observation of the reception of e-mail. However, it is possible to carry out this process of receiving the content in response to user's instructions.

If an operation associated with the delivery request is performed by the user, the process performed by controller 212 shifts to step S302. Simultaneously, controller 212 continuously monitors the reception of e-mail, and if the reception of e-mail is observed, the process shifts to step S303. If the user's operation and the reception of e-mail are absent, the entire process enters a standby loop (S301).

Delivery request transmission step S302 is carried out primarily by components 205-208 of Fig. 2. In the process of sending the delivery request, the notification of the delivery request is provided to distribution server 101. In the present embodiment, the e-mail is utilized for the notification of the delivery request. However, it is possible to utilize, besides the e-mail, a notification using Hypertext Transfer Protocol (HTTP), internet fax or a file transfer method using FTP (File Transfer Protocol). A detailed description of the process in step S302 is provided later.

Content reception step S303 is carried out primarily by components 209-211 of Fig. 2. In the process of receiving the content, the e-mail sent from distribution server 101 is received and the content included in this e-mail is decoded and displayed. A detailed description of the process in step S303 is provided later.

Termination determination step S304 is carried out by controller 212 of Fig. 2. In this step, a determination is made as to whether to terminate the entire process associated with the reception of information. Typically, the process returns to S301 to continue. The termination of the entire process corresponds to turning off of receiving terminal 103 or termination of a program designed for the reception of information.

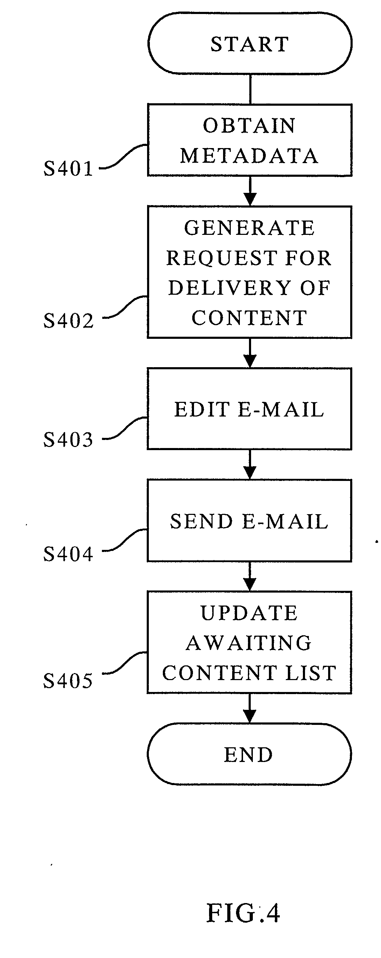

Delivery request transmission step S302 is described hereinafter in detail with reference to Fig. 4.

Metadata acquisition unit 205 obtains metadata on content that the user wants to be delivered (S401).

The user refers to the metadata obtained in step S401 and sets a request for content delivery by means of the GUI or an appropriate editor (S402). This delivery request generated by delivery request generation unit 206 includes the conditions relating to the content to be delivered from distribution server 101 to receiving terminal 103 and more specifically, carries the type of content such as a weather forecast, information about stock prices, comparative information about specifications of latest PCs, an advertisement for a new product or the like, the data format, such as the text, the static image, the sound, the dynamic image or the like, of the content, the maximum size of data, the validity period (a delivery period requested by the user) of content delivery and others.

E-mail editor 207 generates an e-mail having the delivery request prepared in step S402 in its body (S403). The address of distribution server 101 is designated as the address of the addressee of this e-mail. The subject header of this e-mail is not provided with any specific regulation. However, the character string specified by server 101 may be entered in the subject header. In this case, the metadata obtained by acquisition unit 205 includes and specifies the character string to be entered in the subject header. This facilitates the classification of the e-mail on the part of server 101.

Alternatively, a user-specified keyword for use in the classification of e-mail may be entered. Distribution server 101 enters this keyword in the subject header in distributing the content. Thus, e-mail analyzer 210 of receiving terminal 103 can perform classification tailored to its own application.

Next, e-mail transmitter 208 sends the e-mail thus prepared in step S403 to distribution server 101 (S404).

E-mail editor 207 thereafter stores the delivery request sent to distribution server 101 and the address of the distributor requested to deliver the content in awaiting content information management database 213 of data storage 203 (S405). The thus-stored delivery request finds use in identification when the e-mail is received. Editor 207 also deletes processed awaiting content information and invalid awaiting content information and updates an awaiting content list. This awaiting content list is a list of the data on the awaiting contents, and these data are collected from each delivery request already sent to server 101. With this list, e-mail analyzer 210 can determine with ease whether the received e-mail includes the content requested by the user.

In this way, receiving terminal 103, serving as a terminal for receiving the content, keeps the information on the content associated with the thus-sent delivery request in awaiting content list form, so that the e-mail including the content requested by the user can be extracted from the received e-mails and take priority over the others when presented to the user.

Through a series of above-described steps S401-S405, the delivery request is sent from receiving terminal 103 to distribution server 101.

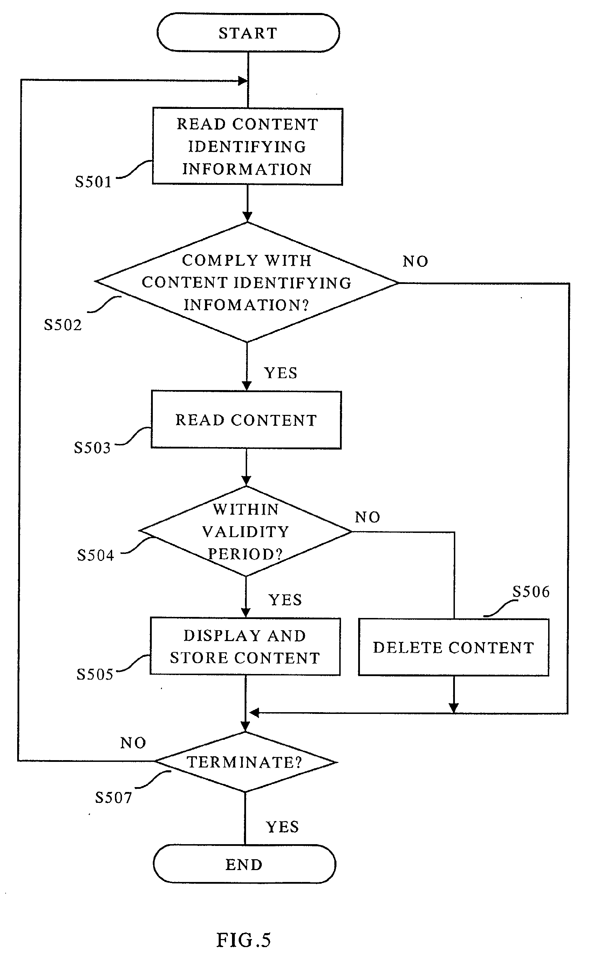

Content reception step S303 is hereinafter described in detail with reference to Fig. 5.

E-mail receiver 209 loads only a header portion of an e-mail received and passes information in the subject header of the header portion thus loaded to e-mail analyzer 210 (S501). In other words, the body of this e-mail is not yet loaded into data processor 202 at this stage.

As described earlier in the explanation of the process of Fig. 4 in which the e-mail is sent, the delivery request sent to information distribution server 101 is also stored in data storage 203 as the awaiting content information. This awaiting content information includes the content identifying information (the subject of the e-mail including the content), the delivery validity period and the address of the distributor requested to deliver.

Analyzer 210 determines whether there exists awaiting content information which conforms to the subject, obtained in step S501, of the e-mail received (S502). If the conformable awaiting content information exits, this means that this e-mail includes the content that distribution server 101 has been requested to deliver, so that the process shifts to step S503.

If such conformable awaiting content information does not exist, then the process shifts to step S507 because this e-mail is unrelated to the content associated with the delivery request.

E-mail receiver 209 loads the e-mail, the subject of which has been identified, in step S502, as being conformable to the awaiting content information, and passes the content included in the body of the e-mail to analyzer 210 (S503).

Analyzer 210 then determines whether a date and time when the thus-loaded e-mail has been received satisfies the condition relating to the delivery validity period included in the awaiting content information stored in awaiting content information management database 213 of storage 203 (S504). If this date and time is within the validity period, the process shifts to step S505, and if this date and time is outside the validity period, then the process shifts to step S506. It is to be noted that "a date and time when e-mail is received" may be set as either "a date and time when the e-mail is spooled and arrives in an electronic in-tray of the user, that is, a date and time when reading of the e-mail is available to the user" or "a date and time when the user of receiving terminal 103 intends to read the e-mail carrying the content".

In step S505, display 211 decodes and displays the content included in the received e-mail, and analyzer 210 stores this content in content management database 214 of storage 203 on an as needed basis.

Analyzer 210 deletes the e-mail which conforms to the content identifying information included in the awaiting content information but is determined, in step S504, as failing to satisfy the condition relating to the delivery validity period (S506).

Here, if the above-mentioned "date and time when e-mail is received" is "a date and time when the user of receiving terminal 103 intends to read the e-mail carrying the content", past-due content having declined value of information can be deleted automatically by analyzer 210. For instance, in cases where the user has not heard or viewed delivered content carrying information such as "a weather forecast for today" or "a recommended TV program for today" or the like which has a short validity period for several days, unknown to the user, analyzer 210 deletes this past-due content. It is to be noted that instead of being deleted, the e-mail may be displayed by coming low on the priority list.

If any received e-mail remains, the process performed by controller 212 returns to step S501 to repeat a series of steps S501-S506. The process of receiving the content terminates when no received e-mail remains.

Through a series of above-described steps S501-S507, the content included in the received e-mail is displayed and stored.

As information receiving terminal 103, an arbitrary terminal such as a personal computer, a personal digital assistant (PDA), a portable telephone or the like can be used, provided that it is capable of receiving and displaying the content.

In the present embodiment, the Internet has been utilized. However, it is possible to utilize an arbitrary network such as a wide area network (WAN), a local area network (LAN), a radio network or a complex network of these networks, and an intranet is similarly applicable.

In the information delivery system in accordance with the present embodiment, information distribution server 101 discloses the Web page carrying the list of the contents that includes the metadata on the contents, while receiving terminal 103 obtains the metadata on the content by means of HTTP or FTP. The metadata carries information enabling the user to grasp an overview of the content and information necessary for the reception of the content. In cases where receiving terminal 103 obtains these pieces of information by other means, step S401 is unnecessary. It is to be noted that the delivery request may be generated automatically by previously keeping various kinds of information associated with the delivery request.

In the classification of the e-mails, a condition that the awaiting content list is used for reference, and an address of an e-mail sender coincides with the address of the distributor requested to deliver may also be included. With this condition, the e-mail including the content requested by the user can take higher priority over the others when presented to the user.

The delivery validity period included in the delivery request has been, in the present embodiment, the period between the date and time when the acceptance of content delivery starts and the date and time when the acceptance of delivery expires. However, the validity period may include only one of these dates and times.

Alternatively, the dates and times when the acceptance of delivery starts and expires may be replaced by dates and times when the delivery carried out by distribution server 101 starts and expires. In this case, even if the e-mail is not read within the validity period, the content which has been necessary for the user can be heard or viewed at a later date without being deleted.

Further, the date and time when the e-mail is received has been required to be within the delivery validity period in this embodiment. However, this date and time may be outside the delivery validity period.

In the above case, the e-mail including the user-requested content carrying old, past-due information is extracted and may be deleted automatically or come low on the priority list when presented to the user.

In cases where the user wants pay content delivered, by specifying the validity period of this delivery, the user has an advantage that the user no longer continues to subscribe to the content which has become unnecessary information.

A description is hereinafter provided of configuration and functions of information distribution server 101.

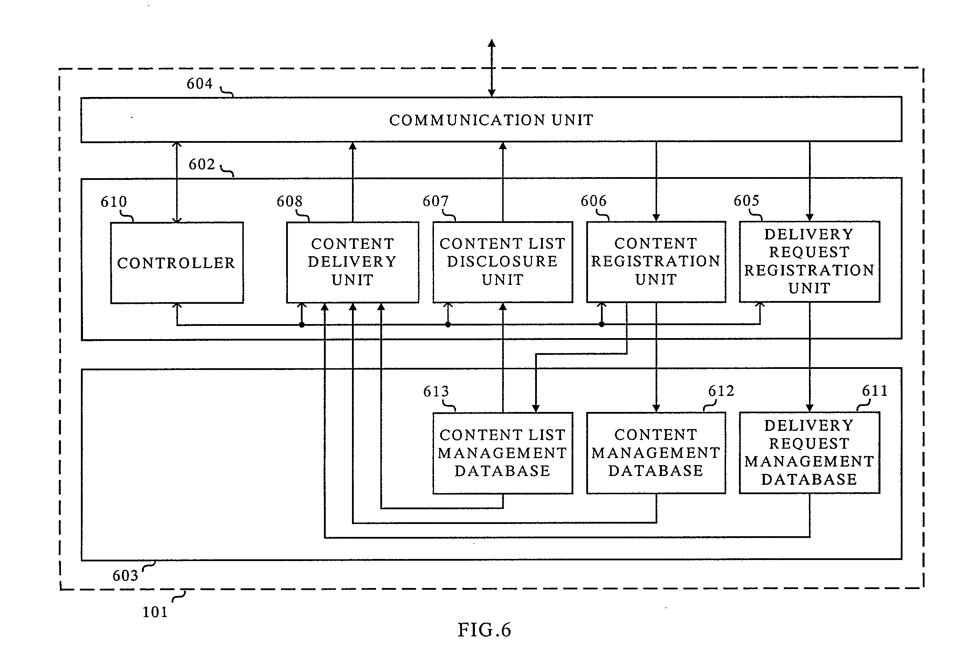

Fig. 6 is a block diagram of distribution server 101 of Fig. 1.

Distribution server 101 in accordance with the first exemplary embodiment is a system comprised of a server work station or a server PC, a mass storage device and a variety of peripheral devices such as a network card and the like.

Data transmission and reception processor 602 stores and manages the informational contents, accepts the delivery request and delivers the content. Processor 602 is comprised of several units (described later).

Data storage 603 is a nonvolatile storage device which stores the contents and is freely accessible by processor 602. This storage 603 is constructed of a plurality of databases stored with the contents and a variety of data.

Communication unit 604 intercommunicates with information receiving terminal 103 and information provision terminal 102 across network 104. In Fig. 6, communication unit 604 is positioned outside processor 602. In other words, communication unit 604 is a general-purpose communication unit (a network interface) serving as a hardware resource of distribution server 101. However, it is possible to incorporate some facilities of communication unit 604 into processor 602.

The components of data transmission and reception processor 602 and functions of these components are described as follows.

Delivery request registration unit 605 receives and stores the delivery request from receiving terminal 103. Content registration unit 606 stores the content received from provision terminal 102 and updates a management list of the stored contents.

Content list disclosure unit 607 discloses the list of the stored contents to receiving terminal 103. In the present embodiment, distribution server 101 utilizes this disclosure unit 607 to function as the Web site disclosing an HTML document generated from this list of the contents. However, in cases where the user is presented with the information on the contents by other means such as facsimile and the like, this disclosure unit 607 is not requisite.

Content delivery unit 608 delivers the content in response to the delivery request received from receiving terminal 103. Delivery unit 608 has a means to translate and process the content, a means to compress the content, a means to encode the content, a means to add an electronic signature and others on an as needed basis.

Controller 610 controls components 605-608 of data transmission and reception processor 602 and communication unit 604 to execute the transmission and reception of data.

The components of data storage 603 and functions of these components are described as follows.

Delivery request management database 611 stores the delivery request sent from receiving terminal 103 in the form of a content delivery list. One delivery request is comprised of at least one of the address of receiving terminal 103, the type of content to be delivered, the data format of the content, the maximum amount of data, the delivery validity period, the content identifying information, the information about the billing form, the permissible amount of money payable and others.

Content management database 612 is stored with the contents received from provision terminal 102.

Content list management database 613 manages the list of the contents stored in database 612.

In this embodiment, each of the contents is a variable-length data comprised of at least one or more files, so that database 612 managing the contents and database 613 managing the list of the contents are independent of each other. However, the contents and the list of the contents may be managed by a single database.

Information about one content that is managed by content list management database 613 includes a type of content, a data format of the content, an amount of content data, a filename of the content, an absolute address of a location of the content and others. It may also include a period during which the content is of value as information and a validity period indicative of freshness of the content.

In cases where one content consists of a plurality of sub-contents, the information about this content also includes information about the construction of the content from the plurality of sub-contents. In cases where content has scalability, that is, the capability of generating content having different information and a different amount of data, the information about this content also includes information about the scalability, and distribution server 101 has a transcoding means to convert this content.

Distribution server 101 stores the content received from provision terminal 102 in data storage 603 and updates the management list of the stored contents. These acts are hereinafter referred to as a process of storing the content. Simultaneously with this process, server 101 receives the delivery request from receiving terminal 103 and stores this delivery request. These acts are hereinafter referred to as a process of storing the delivery request. Also, server 101 continuously checks the present time and delivers the content in response to the delivery request received from receiving terminal 103. These acts are hereinafter referred to as a process of delivering the content. These processes are done simultaneously.

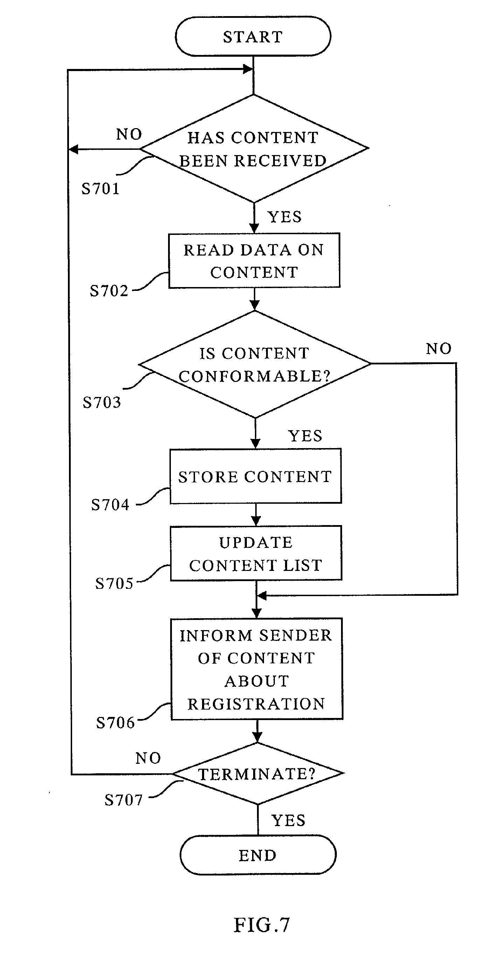

Referring to Figs. 7-9, a detailed description is hereinafter provided of the process of storing the content, the process of storing the delivery request and the process of delivering the content.

Fig. 7 is a flowchart of a procedure for the process of storing the content on the part of information distribution server 101.

Controller 610 checks communication unit 604 to see if unit 604 has received content from information provision terminal 102. If the content has been received, the process shifts to the next step, and if no content has been received, the process enters a standby loop (S701).

Content registration unit 606 loads only metadata carrying an overview of the content received by communication unit 604 (S702).

Next, registration unit 606 analyzes the metadata loaded and determines whether an amount of data, a character code, a format such as an image encoding format or the like and others of this content conform to requirements. If the contents of this content are determined as being conformable, the process shifts to the next step. If the contents of this content are determined as being not conformable, this content and the metadata on this content are deleted, and the process shifts to step S706 (S703).

Registration unit 606 stores the content determined, in step S703, as being conformable in content management database 612 (S704). Further, according to the metadata on the content stored in step S704, registration unit 606 updates content list management database 613 (S705).

Subsequently, controller 610 notifies provision terminal 102, which has sent the content, whether the content has been registered (S706). Controller 610 thereafter determines whether to terminate the process of storing the content (S707). Typically, this process returns to step S701 to continue. The termination of this process corresponds to turning off of distribution server 101 or termination of a program designed for the transmission and reception of information.

Through a series of above-described steps S701-S707, the process of storing the content sent from provision terminal 102 is done.

Even in cases where provision terminal 102 is a content provision server, information distribution server 101 delivers the content provided by the content provision server to information receiving terminal 103, intermediating between the content provision server and receiving terminal 103. Thus, server 101 can perform efficient content delivery adapted to the demands of both of them.

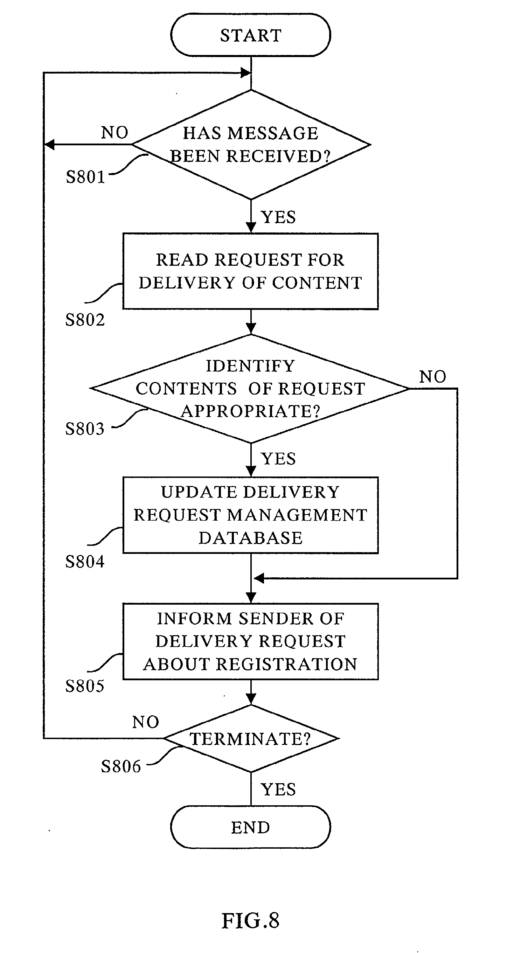

Fig. 8 is a flowchart of a procedure for the process of storing the delivery request on the part of distribution server 101.

Controller 610 checks communication unit 604 to see if unit 604 has received a request for content delivery from receiving terminal 103. If the delivery request has been received, the process shifts to the next step, and if no delivery request has been received, the process enters the standby loop (S801).

Delivery request registration unit 605 loads the delivery request received (S802). Registration unit 605 thereafter analyzes the received delivery request to determine whether information including a type of content, a format of the content, a maximum size of data, a validity period of content delivery and others is appropriate. If the delivery request is appropriate, the process shifts to the next step. If inappropriate, this delivery request is deleted, and the process shifts to step S805 (S803).

Registration unit 605 stores the delivery request determined, in step S803, as being appropriate in delivery request management database 611 (S804). Subsequently, controller 610 notifies receiving terminal 103, which has sent the delivery request, whether this request has been registered (S805).

Controller 610 thereafter determines whether to terminate the process of storing the delivery request (S806). Typically, this process returns to step S801 to continue. The termination of this process corresponds to the turning off of distribution server 101 or the termination of the program designed for the transmission and reception of information.

Through a series of above-described steps S801-S806, the process of storing the delivery request on the part of distribution server 101 is done.

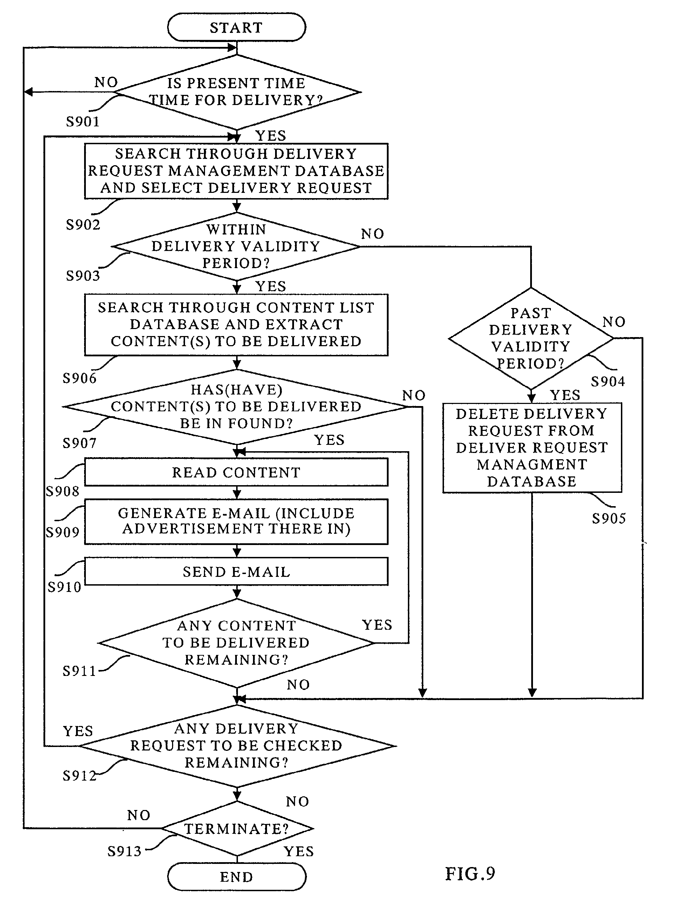

Fig. 9 is a flowchart of a procedure for the process of delivering the content on the part of distribution server 101.

Controller 610 checks a timetable carrying times (dates and times) when contents are to be delivered to see if the present time is the time for content delivery. If the present time is the time for content delivery, the process shifts to the next step, and if the present time is not the time for content delivery, the process enters the standby loop (S901).

Content delivery unit 608 retrieves the delivery requests one by one from delivery request management database 611 (S902) and performs a series of steps S902-S912 (steps S903-S912 are described later). Each of these delivery requests is comprised of the address of receiving terminal 103, the type of content to be delivered, the data format of the content, the maximum amount of data, the validity period of content delivery, the content identifying information, the information about the billing form and others.

Delivery unit 608 then performs a comparison between the delivery validity period listed in the delivery request retrieved and the present date and time. If the present date and time is within the delivery validity period, the process shifts to step S906. If the present date and time is outside the delivery validity period, then the process shifts to step S904 with no content delivered (S903).

Delivery unit 608 performs a comparison between the delivery validity period and the present date and time, and if the present date and time is past the delivery validity period, the process shifts to step S905. If the present date and time is antecedent to the delivery validity period, then the process shifts to step S912 (S904).

Delivery unit 608 deletes, from database 611, the delivery request determined, in step S904, as having the distribution validity period antecedent to the present date and time, that is, the delivery request determined as being unnecessary for use in the delivery of content to the user (S905). In this way, the past-due delivery data is deleted from the content delivery list on an as needed basis, so that the content not requested by the user can be prevented from being erroneously delivered. Here, continued delivery of content may be made possible by sending an e-mail to receiving terminal 103 to confirm extension of the period in the delivery request and receiving a request for the extended period from the user.

Delivery unit 608 refers to content list management database 613 to retrieve content which conforms to the delivery request selected in step S902 and retains the result of retrieval (S906). Here, there may be cases where a plurality of contents which conform to the delivery request are retrieved.

Delivery unit 608 thereafter checks the result of step S906. If the content which conforms to the delivery request has been found, the process shifts to the next step, and if no conformable content has been found, the process shifts to step S912 (S907).

Delivery unit 608 searches through content management database 612 and loads the content retrieved, in step S906, from the list of the contents (S908).

Subsequently, delivery unit 608 generates an e-mail document including the content loaded in step S908 (S909). This e-mail is generated in accordance with the data format of the content and the maximum amount of data that are included in the delivery request. For example, in cases where the delivery request specifies that only text data is readable, delivery unit 608 includes text data extracted from the content in the e-mail. In cases where the delivery request specifies that only sound data is acceptable, it is possible to include only sound data extracted from the content or sound data converted from text data by a sound synthesis capability. In cases where the delivery request specifies a small maximum amount of data, summarized text data prepared beforehand as a part of the content is included in only text data extracted. As to static image data or the like, image data, the size of which is reduced by resolution conversion, is included. The address of receiving terminal 103 that is listed in the delivery request corresponding to the above content is designated as an addressee of this e-mail. In addition, at least either the content identifying information, which is listed in the delivery request corresponding to the above content, or the type of content, which is included in the content attributes, is entered in the subject header of this e-mail (S909). Thus, receiving terminal 103 can classify the received content according to the user-specified character string or the distributor-specified type of content.

In cases where the information about the billing form included in the delivery request selected in step S902 represents a type permitting inclusion of advertisement for reduced content delivery expenses, advertising content is also included in the e-mail.

Next, delivery unit 608 sends the e-mail generated in step S909 to receiving terminal 103 (S910).

Delivery unit 608 then determines whether all the contents retrieved in step S906 have been delivered (S911). In other words, if the plurality of contents conforming to the delivery request exist and have not been all delivered, the process returns to step S908 to proceed to the delivery of the next content. If all the contents have been delivered, the process shifts to the next step.

In the present embodiment, one e-mail has carried one content. However, one e-mail may carry the plurality of contents.

Delivery unit 608 determines whether there remains any delivery request which has not undergone the process of content delivery in delivery request management database 611 (S912). If any yet-to-be-processed delivery request remains, the process returns to step S902, and if there is no yet-to-be-processed delivery request, the process shifts to the next step.

Controller 610 determines whether to terminate the process of delivering the content (S913). Typically, this process returns to step S901 to continue. The termination of this process corresponds to the turning off of distribution server 101 or the termination of the program designed for the transmission and reception of information.

Through a series of above-described steps S901-S913, the process of delivering the content on the part of distribution server 101 is done.

In the present embodiment, information distribution server 101 discloses the contents available to the user by means of content list disclosure unit 607 and sends the content requested by the user under the user-specified delivery conditions. Thus, server 101 can perform efficient content delivery without displeasing the user.

It is to be noted that in cases where the list of the contents available from distribution server 101 is provided in printed form and not by the Web site, content list disclosure unit 607 is unnecessary.

Moreover, in the case of a system in which distribution server 101 stores the contents off-line, it is unnecessary for information provision terminal 102 to be connected to network 104.

In this embodiment, the e-mail has been utilized for the delivery of the content to information receiving terminal 103. However, the content delivery using the internet fax or the FTP can similarly be applied to this embodiment by including the content identifying information in a part of header information, creating a file including the content data and the content identifying information added to the content data, or creating separate files for the content identifying information and the content in the transmission.

As described above, if receiving terminal 103 carries out the processes illustrated by the flowcharts of Figs. 3-5, while distribution server 101 carries out the processes illustrated by the flowcharts of Figs. 7-9, distribution server 101 sends, for only the user-specified certain period of time, the e-mail including the user-specified content and the user-specified content identifying information in the subject header of the e-mail. On the other hand, receiving terminal 103 performs classification of the e-mail by using the delivery validity period and the content identifying information, thus giving priority to the important content in showing this content to the user. Moreover, even if receiving terminal 103 receives the past-due content or information, terminal 103 can delete this past-due content or information automatically.

In this way, the user of receiving terminal 103 can advantageously read the receive data including the important content that is given priority, without missing it even if the user receives enormous volumes of receive data. Simultaneously with this, there can be obtained an advantage that receiving terminal 103 can delete the receive data including the past-due content carrying no value of information automatically. Further, the provider of the content delivery can offer efficient service that eliminates the provision of needless contents, by sending the contents conforming to the user's request for only the user-requested period of time.

### Second Exemplary Embodiment

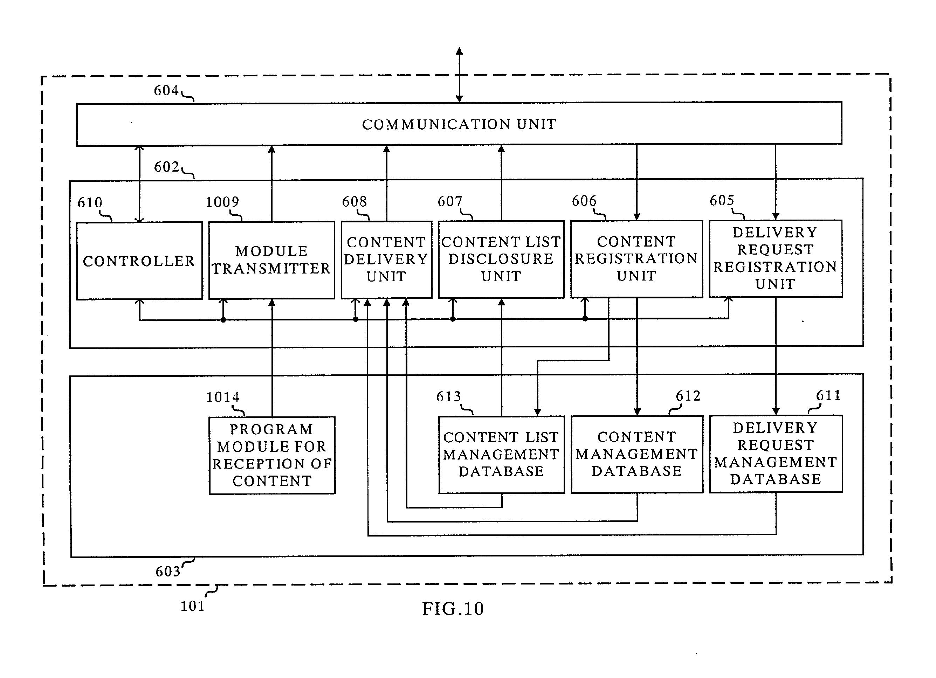

Fig. 10 is a block diagram of information distribution server 101 in accordance with the second exemplary embodiment of the present invention. The present embodiment differs from the first exemplary embodiment in that distribution server 101 includes program module 1014, a software program which is designed for the reception of content and more particularly, designed to implement the functions of data processor 202 described in the first embodiment, and module transmitter 1009 which sends module 1014 to information receiving terminal 103.

Module transmitter 1009 is a program delivery unit which delivers program module 1014 in response to a request of an arbitrary terminal.

Controller 610 controls components 605-608 and 1009 of data transmission and reception processor 602 and communication unit 604 to execute the transmission and reception of data.

Program module 1014 is a software program module described in the Java language. The arbitrary terminal having a JAVA execution environment can function as receiving terminal 103 by loading program module 1014.

With this program module 1014, content delivery service can be offered to an indefinite number of arbitrary users.

Instead of being the program module described in the JAVA language, program module 1014 may be a program module described in any other language supported by many platforms.

Controller 610 also monitors the reception of the request for delivery of the software designed for the transmission and reception of e-mail from receiving terminal 103 by means of communication unit 604. If this request is received, module transmitter 1009 retrieves program module 1014 from data storage 603 and sends this module 1014 to requesting receiving terminal 103. This process of sending module 1014, the process of storing the content, the process of storing the delivery request and the process of delivering the content are done simultaneously.

It is to be noted here that instead of being downloaded from distribution server 101 to receiving terminal 103, program module 1014 may be installed in receiving terminal 103 off-line or from the beginning. In either case, module transmitter 1009 and program module 1014 are not requisite.

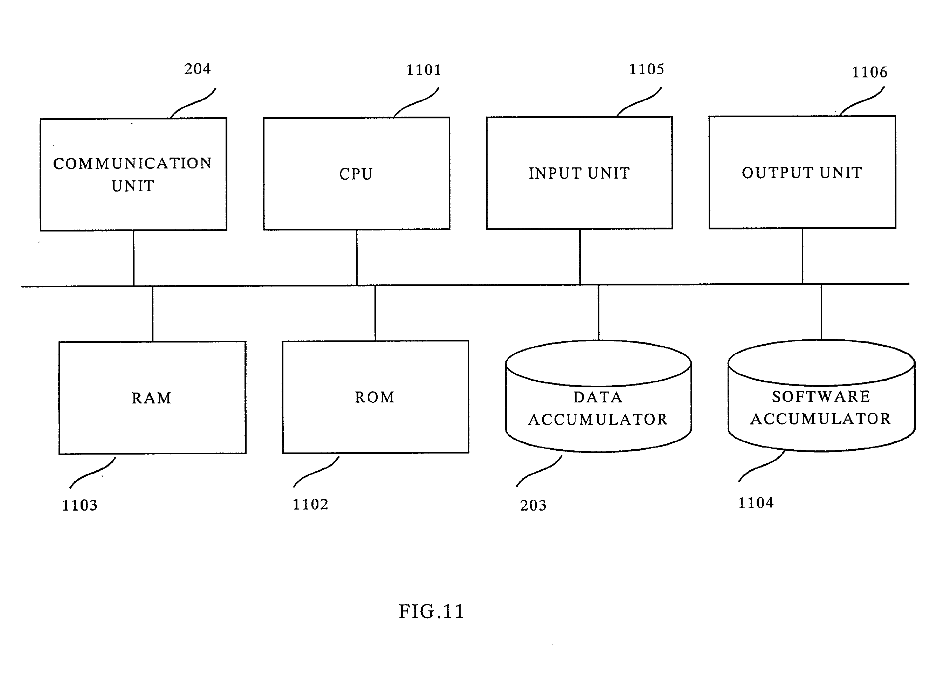

Fig. 11 is a block diagram of a personal computer used as information receiving terminal 103 in accordance with the second exemplary embodiment of the present invention.

CPU 1101 controls hardware of the personal computer in accordance with a program loaded into RAM 1103 from software storage 1104 serving as a hard disk. An Initial Program Loader (IPL), a program responsible for initial software loading from software storage 1104 into RAM 1103 when the power is turned on, is written into ROM 1102.

Input unit 1105 is a keyboard. Through this input unit 1105, an instruction of the user is input to the personal computer, and output unit 1106 outputs display corresponding to this instruction. Communication unit 204 performs two-way communication with network 104 shown in Fig. 1.

Through this communication unit 204, program module 1014 is downloaded from distribution server 101 to RAM 1103. Contents downloaded are stored by software storage 1104 and then each undergo execution in accordance with the user's instruction. This program module 614 starts automatically upon next boot-up of the personal computer.

Through the execution of this program module 1014, the same functions as those of data processor 202 that are described in the first exemplary embodiment can be implemented in the personal computer.

In the present embodiment, the personal computer has been used. However, this embodiment is not limited to this, and an arbitrary terminal such as a PDA, a portable telephone or the like is also applicable, provided that it can receive and display the content.

In cases where receiving terminal 103 is a general-purpose terminal such as the portable telephone or the like, while its data processor 202 is not a general-purpose program designed for the transmission and reception of e-mail, it is preferable that only the e-mails each including the content associated with the delivery request are loaded, but not all the e-mails received by receiving terminal 103. In cases where there is such a demand, e-mail receiver 209 loads only the e-mails each carrying the content identifying information entered in the subject header.

In such a system comprised of the content distribution server and the content receiving terminal, the content distribution server can deliver the content requested by the user to the content receiving terminal after providing the content receiving terminal with the program designed for the reception of the content. Thus, common personal computers can find use as the client terminals, and the content delivery system for delivering advertising content to the indefinite number of users efficiently can be constructed with ease.

## Claims

1. A method for sending content, said method comprising the steps of:
storing a request for delivery of the content in a content delivery list, the delivery request being provided by a user and including a delivery validity period representing a period during which the delivery of the content is accepted and an address of an addressee of the content;
extracting the delivery request within the delivery validity period from the content delivery list; and
delivering the content based on the extracted delivery request.

2. A method for sending content, said method comprising the steps of:
storing a request for delivery of the content in a content delivery list, the delivery request being provided by a user and including a delivery validity period representing a period during which the delivery of the content is accepted, an address of an addressee of the content and a content attribute representing an attribute of the content;
extracting the delivery request within the delivery validity period from the content delivery list;
selecting content conforming to the content attribute included in the extracted delivery request from a content management database stored with the content; and
delivering the selected content based on the extracted delivery request.

3. A method for sending content, said method comprising the steps of:
storing a request for delivery of the content in a content delivery list, the delivery request being provided by a user and including a delivery validity period representing a period during which the delivery of the content is accepted, an address of an addressee of the content, a content attribute representing an attribute of the content and a content identifying information comprised of an arbitrary character string;
extracting the delivery request within the delivery validity period;
selecting content conforming to the content attribute included in the extracted delivery request from a content management database stored with the content;
generating transmit data including the content and the content identifying information added to the content; and
delivering the transmit data based on the extracted delivery request.

4. The method of claim 3, wherein the content attribute includes at least one of a type of content representing either a category or a genre of the content, a data format of the content, a maximum amount of data on the content and information about a billing form.

5. The method of claim 3, wherein the step of generating the transmit data comprises the step of generating an e-mail including the content in a body of the e-mail and the content identifying information in a subject header of the e-mail.

6. The method of claim 4, wherein in the step of generating the transmit data, advertising content is added to the content according to the information about the billing form that is included in the content attribute.

7. The method of claims 1, 2 or 3, wherein in the step of extracting the delivery request, the delivery request past the delivery validity period is deleted from the content delivery list.

8. A method for receiving content, said method comprising the steps of:
updating an awaiting content list by storing awaiting content information in the awaiting content list, the awaiting content information including a delivery validity period that is previously registered with a distributor requested to deliver the content and represents a period during which the delivery of the content is accepted, and an address of the distributor requested to deliver the content; and
extracting only receive data conforming to the given conditions for selection of the content that are stored in the awaiting content list.

9. The method of claim 8, further comprising the step of sending a request for delivery of the content to the distributor requested to deliver the content, the delivery request including the delivery validity period, an address of an addressee of the content and a content attribute representing an attribute of the content.

10. The method of claim 9, wherein in the step of sending the delivery request, the delivery request further including a content identifying information comprised of an arbitrary character string to be added to the content to be delivered is sent, and in the step of updating the awaiting content list, the awaiting content information further including the content identifying information is stored in the awaiting content list.

11. The method of claim 10, wherein the receive data is an e-mail including the content in a body of the e-mail and the content identifying information in a subject header of the e-mail.

12. The method of claim 11, wherein the conditions for selection of the content are a condition that an address of a sender of the received e-mail coincides with the address of the distributor requested to deliver the content, a condition that the character string entered in the subject header of the received e-mail coincides with the content identifying information and a condition that a date and time when the received e-mail is received is one of within and outside the delivery validity period.

13. The method of claim 11, wherein the conditions for selection of the content are a condition that an address of a sender of the received e-mail coincides with the address of the distributor requested to deliver the content, a condition that the character string entered in the subject header of the received e-mail coincides with the content identifying information and a condition that a date and time when the received e-mail is sent is one of within and outside the delivery validity period.

14. A program product for causing a computer to perform the method of claims 1, 2 or 3.

15. A program product for causing a computer to perform the method of claims 8, 9 or 10.

16. A program product for causing a computer to perform a process of reading an e-mail, a process of sending and receiving the e-mail and the method of claims 8, 9 or 10.

17. A computer-readable recording medium recording a program for causing a computer to perform the method of claims 1, 2 or 3

18. A computer-readable recording medium recording a program for causing a computer to perform the method of claims 8, 9 or 10.

19. A computer-readable recording medium recording a program for causing a computer to perform a process of reading an e-mail, a process of sending and receiving the e-mail and the method of claims 8, 9 or 10.

20. A content distribution server comprising:
a delivery request registration unit for storing a request for delivery of content in a content delivery list, said delivery request including a delivery validity period representing a period during which the delivery of said content is accepted and an address of an addressee of said content; and
a content delivery unit for extracting said delivery request within said delivery validity period from said content delivery list and delivering said content based on said extracted delivery request.

21. The server of claim 20, further comprising:
a program delivery unit for delivering, to an arbitrary terminal, a program for causing execution of the method of claims 8, 9 or 10.

22. The server of claim 20, further comprising:
a content registration unit for accepting, from an arbitrary content provision server providing said content, a request to deliver said content and collecting said content and a content attribute representing an attribute of the content from said content provision server.

23. A content receiving terminal comprising:
a delivery request generation unit for generating a request for delivery of content, said delivery request including a user-specified delivery validity period representing a period during which the delivery of said content is accepted and a user-specified address of an addressee of said content;
an editor for storing awaiting content information in an awaiting content list, said awaiting content information including said delivery validity period and an address of a distributor requested to deliver said content;
a receiver for receiving receive data including said content; and
an analyzer for extracting only said receive data conforming to the given conditions for selection of said content that are stored in the awaiting content list.

24. A content delivery system comprising the server of claim 20, the receiving terminal of claim 23 and a content provision server providing content.
